Europäisches Patentamt

European Patent Office

Office européen des brevets

(19)

(11) EP 0 845 872 A2

(12) EUROPÄISCHE PATENTANMELDUNG

(43) Veröffentlichungstag:
03.06.1998 Patentblatt 1998/23

(51) Int Cl.⁶: H04B 1/707

(21) Anmeldenummer: 97440113.5

(22) Anmeldetag: 19.11.1997

(84) Benannte Vertragsstaaten:
AT BE CH DE DK ES FI FR GB GR IE IT LI LU MC
NL PT SE
Benannte Erstreckungsstaaten:
AL LT LV MK RO SI

(30) Priorität: 27.11.1996 DE 19649085

(71) Anmelder: ALCATEL ALSTHOM COMPAGNIE
GENERALE D'ELECTRICITE
75008 Paris (FR)

(72) Erfinder:
• Heidemann, Rolf Dr.
71732 Tamm (DE)
• Krimmel, Heinz
70825 Korntal-Münchingen (DE)

(74) Vertreter: Schätzle, Albin, Dipl.-Phys. et al
Alcatel Alsthom
Intellectual Property Department,
Postfach 30 09 29
70449 Stuttgart (DE)

(54) **Übertragung von breitbandigen Signalen in einem durch stationäre Signale gestörten Netz**

(57) In ein Übertragungnetz ( NET ), z.B. ein Koaxialkabelnetz mit Rückkanal, werden beispielsweise stationäre Störsignale von Radiosendern eingestrahlt, die die Übertragung von breitbandigen Signalen, z.B. Daten, im Rückkanalfrequenzbereich beeinträchtigen, da sie im selben Frequenzbereich liegen. Die Sende-/Empfangseinheit ( SE1 ) einer Endstelle ( END ) beinhaltet eine Empfangseinheit ( EMP1 ) zum Empfang von Frequenzwerten von stationären Störsignalen, die in die Übertragungsstrecke eingestrahlt werden, einen Speicher ( MEMO1 ) zur Speicherung der empfangenen Frequenzwerte sowie einen Generator ( SG1, NG1 ) zur Generierung einer Spreizfunktion mit spektralen Nullstellen bei Frequenzwerten, die in Abhängigkeit von den gespeicherten Frequenzwerten ermittelt werden und einen Multiplizierer ( MUL1 ) zur Multiplikation der zu übertragenden breitbandigen Signale mit der generierten Spreizfunktion mit spektralen Nullstellen. Die spektralen Nullstellen werden derart generiert, daß bei einer Multiplikation der Spreizfunktion mit den spektralen Nullstellen mit den einzelnen Störsignalen jeweils wenigstens eine der spektralen Nullstellen im Frequenzbereich der breitbandigen Signale liegt, so daß bei einer Entspreizung der breitbandigen Signale in einer Zentrale ( ZE ) die Beeinträchtigung durch die Störsignale reduziert wird.

SE 1

Fig.2

EP 0 845 872 A2

**Beschreibung**

Die Erfindung betrifft zwei Sende-/Empfangseinrichtungen und ein Verfahren zum Übertragen von breitbandigen Signalen gemäß den Patentansprüchen 1, 7 bzw. 10 sowie zwei Sende-/Empfangseinrichtungen zum Empfang von breitbandigen Signalen gemäß den Patentansprüchen 3 bzw. 12.

Breitbandige Signale sind beispielsweise Anforderungssignale oder Datensignale, die von einem Teilnehmer zu einer Zentrale im Rückkanalfrequenzbereich eines Verteilnetzes mit Rückkanal übertragen werden. In EP 0 422 032 B1 ist ein Datenübertragungsgerät für ein Kabelfernsehverteilnetz mit Rückkanal beschrieben, mittels dessen Daten eines Teilnehmers im Rückkanal-frequenzbereich unter Verwendung der Spreizspek-trums-Technik zu einer Zentrale übertragen werden. In ein Kabelfernsehverteilnetz werden beispielweise stationäre Störsignale von Rundfunk-Radiosendern eingestrahlt, die die Übertragung der Daten im Rückkanalfrequenzbereich beeinträchtigen, da sie im selben Frequenzbereich liegen. Im Rückkanal wird beispielsweise der Frequenzbereich 5 MHz bis 30 MHz verwendet. Zur störungsfreien Übertragung von Daten mit einer hohen Bitrate, z.B. 2 Mbit/s, steht aufgrund der Vielzahl von stationären Störsignalen kein hinreichend großer störungsfreier Frequenzbereich im Rückkanal zu Verfügung. Bei der Entspreizung werden aber auch die stationären Störsignale mit der Spreizfunktion multipliziert und dadurch gespreizt. Damit gelangen Teile der Störsignale auch in das Frequenzband der breitbandigen Signale und führen zu einem verminderten Signal-zu-Rausch Verhältnis.

Es ist deshalb eine Aufgabe der Erfindung, breitbandige Signale derart zu übertragen, daß sie weniger störanfällig gegen stationäre Störsignale sind.

Diese Aufgabe wird durch die Lehre der unabhängigen Patentansprüche 1, 3, 7, 10 und 12 gelöst. Vorteilhafte Ausgestaltungen sind den abhängigen Patentansprüchen 2 bis 6, 8 bis 9 und 11 zu entnehmen.

Ein besonderer Vorteil der Erfindung ist, daß die Übertragung der breitbandigen Signale sehr unempfindlich gegenüber frequenzdiskreten Störsignalen ist. Die Bitfehler, die durch die ausgesparten Störsignale entstünden, werden reduziert.

Ferner ist die Erfindung sowohl für die Übertragung über Koaxialkabel als auch über optische Leitungen sowie über Funk verwendbar.

Im folgenden wird die Erfindung anhand zweier Ausführungsbeispiele unter Zuhilfenahme der Figuren 1 bis 6 erläutert. Es zeigen:

Fig. 1  eine schematische Darstellung eines Übertragungsnetzes mit vier erfindungsgemäßen Sende-/Empfangseinrichtungen,

Fig. 2  einen schematisch dargestellten Aufbau ei-ner ersten erfindungsgemäßen Sende-/Emp-fangseinrichtung des Übertragungsnetzes aus Fig.1,

Fig. 3  einen schematisch dargestellten Aufbau einer zweiten erfindungsgemäßen Sende-/Empfangseinrichtung des Übertragungsnetzes aus Fig.1,

Fig. 4  eine Darstellung von sechs Diagrammen für unterschiedliche Signalspektren,

Fig. 5  einen schematisch dargestellten Aufbau ei-ner dritten erfindungsgemäßen Sende-/Emp-fangseinrichtung des Übertragungsnetzes aus Fig.1 und

Fig. 6  einen schematisch dargestellten Aufbau ei-ner vierten erfindungsgemäßen Sende-/Emp-fangseinrichtung des Übertragungsnetzes aus Fig.1.

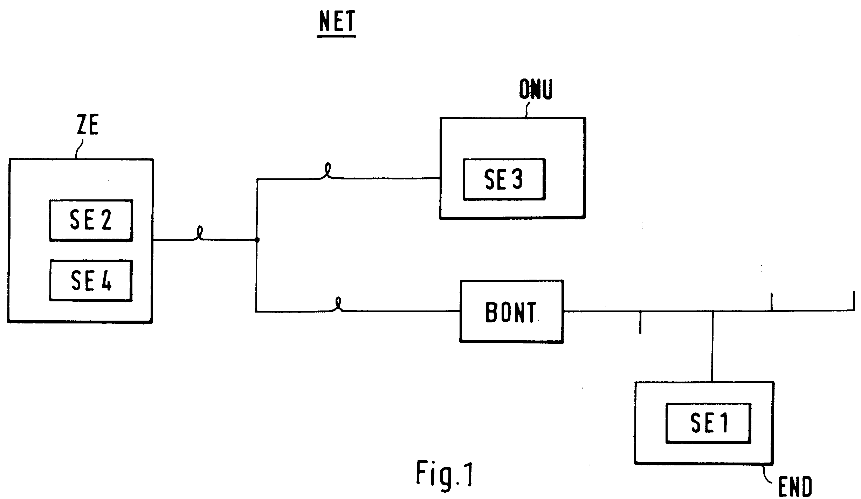

Das erste Ausführungsbeispiel wird unter Zuhilfenahme der Fig. 1 bis 3 erläutert. Fig. 1 zeigt ein Übertragungsnetz mit vier erfindungsgemäßen Sende-/Empfangseinrichtungen. Das Übertragungsnetz NET ist ein hybrides Glasfaser/Koaxialkabel Anschlußnetz mit Rückkanal. Das Übertragungsnetz NET dient beispielsweise der Übertragung von analogen und digitalen Fernseh- und Videosignalen sowie Datensignalen von einer Zentrale ZE zu mehreren Endstellen END, wovon eine dargestellt ist. Die zu übertragenden Signale werden in der Zentrale ZE elektrisch/optisch umgesetzt und über zwei Verteilnetze aus optischen Leitungen, z. B.Glasfaserleitungen, und optischen Splittern zu mehreren optischen Netzwerkeinheiten ONU bzw. mehre-ren optischen Breitbandnetzabschlüssen BONT, von denen jeweils eine bzw. einer dargestellt ist, übertragen. In einem optischen Breitbandnetzabschluß BONT findet eine optisch/elektrische Umsetzung der empfangenen Signale statt, die anschließend elektrisch über Koaxialkabel zu mehreren Endstellen END übertragen werden. Die Videosignale sind beispielsweise von Teilnehmern interaktiv ausgewählte Spielfilme, Lernprogramme, Werbefilme aus der Touristikbranche oder dergleichen. Die Auswahl der Videosignale erfolgt über den Rückkanal, dessen Frequenzbereich beispielsweise zwischen 5 MHz und 30 MHz liegt.

Die Übertragung der Signale im Rückkanalfrequenzbereich erfolgt mittels der Spreizspektrums-Technik. Ein zu übertragendes breitbandiges Signal, z.B. ein Datensignal mit der Bitrate 2 Mbit/s und der Bandbreite 2 MHz, wird über den gesamten oder einen Teil des Rückkanalfrequenzbereiches elektrisch oder optisch gespreizt. Bei der Spreizung werden stationäre, in die Übertragungsstrecke eingestrahlte Störsignale, deren Frequenzwerte zuvor in der Zentrale ZE ermittelt werden, bei der Bildung der Spreizungsfunktion berücksich-tigt, indem im elektrischen Fall spektrale Nullstellen an geeigneten Stellen in die Spreizungsfunktion eingebaut werden und im optischen Fall die ermittelten Frequenzwerte der stationären Störsignale auf der Sendeseite beim Teilnehmer aus dem zu übertragenden optischen Signal optisch herausgefiltert und damit nicht mitübertragen werden. Das elektrisch gespreizte Signal wird elektrisch über Koaxialkabel ( in Fig. 1 nicht dargestellt ) oder nach einer elektrisch/optischen Umsetzung in einem optischen Breitbandnetzabschluß BONT optisch zur Zentrale ZE übertragen, wo es vor der Entspreizung im elektrischen Fall optisch/elektrisch umgesetzt wird.

In der Zentrale ZE erfolgt die Entspreizung des empfangenen, elektrisch gespreizten Signals mit derselben Spreizfunktion, die zur Spreizung verwendet wurde, indem das empfangene Signal mit dieser Spreizfunktion multipliziert wird. Die Entspreizung der optisch gespreizten Signale erfolgt in der Zentrale ZE mittels eines optischen Filters, das dieselben Frequenzen filtert, wie das zur Spreizung verwendete optische Filter.

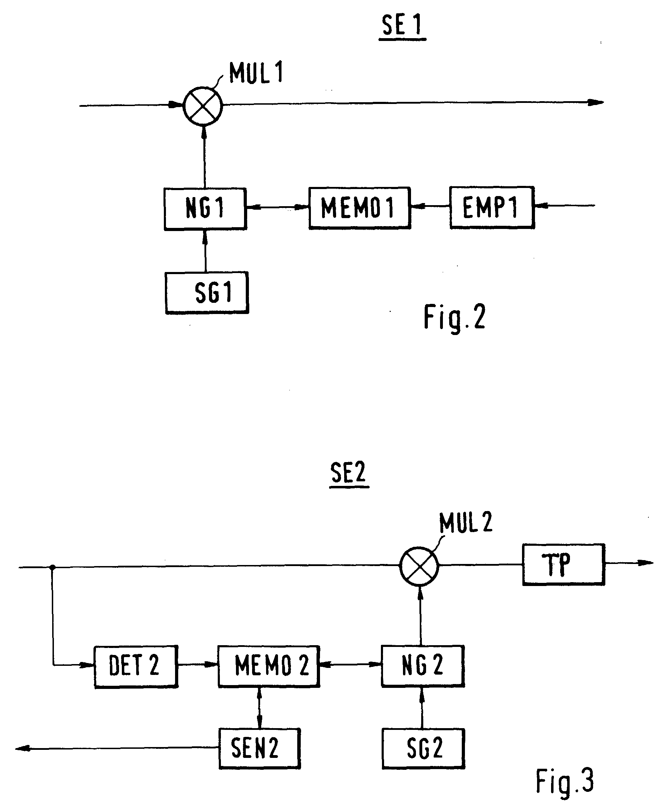

Fig. 2 zeigt eine erste erfindungsgemäße Sende-/Empfangseinrichtung des Übertragungsnetzes aus Fig. 1. Die Sende-/Empfangseinrichtung SE1 dient zur Übertragung von breitbandigen Signalen mittels der Spreizspektrums-Technik von einer Endstelle END zur Zentrale ZE. Die Sende/Empfangseinrichtung SE1 beinhaltet eine Empfangseinheit EMP1, einen Speicher MEMO 1, einen Spreizfunktionsgenerator SG1, einen Nullstellengenerator NG1 und einen Multiplizierer MUL1.

Die Empfangseinheit EMP1 dient dem Empfang von Frequenzwerten von stationären Störsignalen, die in die Übertragungsstrecke eingestrahlt werden. Wie bereits weiter oben beschrieben, werden in der Zentrale ZE die in das Übertragungsnetz NET eingestrahlten und in der Zentrale ZE auftretenden stationären Störsignale, z.B. von Radiosendern, detektiert und wenigstens ein Teil ihrer Frequenzwerte zur Endstelle END übertragen. Zum Empfang dieser Frequenzwerte beinhaltet die Empfangseinheit EMP1 beispielsweise einen Dekoder.

Der Speicher MEMO1 dient zur Speicherung der Frequenzwerte, die von der Empfangseinheit EMP1 empfangen werden. Der Speicher MEMO1 ist beispielsweise ein adressierbarer Schreib-/Lesespeicher, ein sog. RAM; RAM = Random Access Memory.

Der Spreizfunktionsgenerator SG1 und der Nullstellengenerator NG1 bilden gemeinsam einen Generator zur Generierung einer Spreizfunktion mit spektralen Nullstellen bei Frequenzwerten, die in Abhängigkeit von den gespeicherten Frequenzwerten ermittelt werden.

Der Spreizfunktionsgenerator SG1 dient z.B. zur Generierung einer Spreizfunktion für eine pseudozufällige 0/180°-Phasensprungmodulation oder eine pseudozufällige Frequenzsprungmodulation. Die pseudozufällige 0/1 80°-Phasensprungmodulation ist als sog. Direct Sequencing bekannt, die pseudozufällige Frequenzsprungmodulation als sog. Frequency Hopping; siehe beispielsweise telecom praxis 5/1995, Seiten 9 bis 14. Die Spreizfunktion ist beispielsweise eine periodische Rechteckfunktion mit den Werten 1 und -1 und der Taktfrequenz F. Die Taktfrequenz F bestimmt wesentlich die Übertragungsbandbreite, z.B. F = 25 MHz, die ihrerseits stets wenigstens um eine Größenordnung höher als die zur Übertragung der breitbandigen Signale erforderlichen Bandbreite, z.B. 2 MHz, liegt.

Der Nullstellengenerator NG1 dient zur Generierung und Einfügung von spektralen Nullstellen in die generierte Spreizfunktion. Der Nullstellengenerator NG1 liest die abgespeicherten Frequenzwerte der stationären Störsignale aus und ermittelt daraus spektrale Nullstellen, die er in die vom Spreizfunktionsgenerator SG1 generierte Spreizfunktion einfügt. Die spektralen Nullstellen werden derart generiert, daß bei einer Entspreizung der übertragenen gespreizten breitbandigen Signale die durch die dabei auftretende Speizung der Störsignale eingestreute Störung in den Frequenzbereich der breitbandigen Signale minimal ist. Die Spreizung der Störsignale mit der Spreizfunktion mit den spektralen Nullstellen erzeugt idealerweise Nullstellen im Frequenzbereich der breitbandigen Signale. Der Nullstellengenerator NG1 beinhaltet beispielsweise einen digitalen Signalprozessor.

Der Multiplizierer MUL1 dient zur Multiplikation der zu übertragenden breitbandigen Signale mit der generierten Spreizfunktion mit spektralen Nullstellen. Durch die Multiplikation wird die Spreizung der breitbandigen Signale erzielt. Vor der Multiplikation haben die breitbandigen Signale beispielsweise die Bandbreite 2 MHz, nach der Multiplikation beispielsweise die Bandbreite 25 MHz, die dem Frequenzbereich des Rückkanals von 5 MHz bis 30 MHz entspricht. Die gespreizten breitbandigen Signale können somit im Rückkanal übertragen werden. Der Multiplizierer MUL1 ist beispielsweise aus logischen Gattern aufgebaut.

Fig. 3 zeigt eine zweite erfindungsgemäße Sende-/Empfangseinrichtung des Übertragungsnetzes aus Fig. 1. Die Sende-/Empfangseinrichtung SE2 dient zum Empfang von mittels der Spreizspektrums-Technik modulierten breitbandigen Signalen. Sie ist in der Zentrale ZE angeordnet und empfängt die von den Endstellen END ausgesendeten gespreizten Signale. Die Sende/Empfangseinrichtung SE2 beinhaltet einer Detektionseinheit DET2, einen Speicher MEMO2, eine Sendeeinheit SEN2, einen Spreizfunktionsgenerator SG2, einen Nullstellengenerator NG2, einen Multiplizierer MUL2 und ein Tiefpaßfilter TP .

Die Detektionseinheit DET2 dient zur Detektion der Frequenzwerte von stationären Störsignalen, die in das Übertragungsnetz NET eingestrahlt werden und in der Zentrale ZE auftreten. Die Detektionseinheit DET2 ermittelt beispielsweise die im Frequenzbereich 5 MHz bis 30 MHz auftretenden stationären Störsignale bei der Initialisierung des Übertragungsnetzes und/oder in vorgegebenen Zeitabständen, z.B. periodisch. Die Ermittlung erfolgt beispielsweise mit einem sog. Scanner. Die Detektionseinheit DET2 führt des weiteren eine Amplituden- und/oder Intensitätsbestimmung der empfangenen stationären Störsignale und einen Vergleich der empfangenen Störsignale mit einem Minimalwert durch. Sie trifft eine Auswahl der Frequenzwerte mit den höchsten Amplituden und/oder Intensitäten und leitet nur diese Frequenzwerte zum Speicher MEMO2 und zur Sendeeinheit SEN2 weiter. Es ist vorteilhaft die Ermittlung und Einfügung von spektralen Nullstellen nur für eine beschränkte Anzahl von gestörten Frequenzwerten durchzuführen, da nur die Frequenzwerte mit den höchsten Amplituden und/oder Intensitäten sich am stärksten auswirken.

Der Speicher MEMO2 dient zur Speicherung der Frequenzwerte, die von der Detektionseinheit DET2 ermittelt und weitergeleitet werden. Der Speicher MEMO2 ist beispielsweise ein adressierbarer Schreib-/Lesespeicher, ein sog. RAM; RAM = Random Access Memory.

Die Sendeeinheit SEN2 dient zur Übertragung der detektierten Frequenzwerte. Die Sendeeinheit liest die abgespeicherten Frequenzwerte aus und überträgt sie zu den Endstellen END, z.B. im Zeitmultiplexverfahren.

Der Spreizfunktionsgenerator SG2 und der Nullstellengenerator NG2 bilden gemeinsam einen Generator zur Generierung einer Spreizfunktion mit spektralen Nullstellen bei Frequenzwerten, die in Abhängigkeit von den gespeicherten Frequenzwerten ermittelt werden. Die Spreizfunktion mit spektralen Nullstellen ist dieselbe wie die in der Sende/Empfangseinrichtung SE1 generierte.

Der Spreizfunktionsgenerator SG2 dient zur Generierung einer Spreizfunktion für eine pseudozufällige 0/180°-Phasensprungmodulation oder eine pseudozufällige Frequenzsprungmodulation. Die Spreizfunktion ist beispielsweise eine periodische Rechteckfunktion mit den Werten 1 und -1 und der Taktfrequenz F. Die Taktfrequenz F entspricht ungefähr der Übertragungsbandbreite, z.B. F = 25 MHz, die ihrerseits stets wenigstens um eine Größenordnung höher als die zur Übertragung der breitbandigen Signale erforderlichen Bandbreite, z.B. 2 MHz, liegt.

Der Nullstellengenerator NG2 dient zur Generierung und Einfügung von spektralen Nullstellen in die generierte Spreizfunktion. Der Nullstellengenerator NG2 liest die abgespeicherten Frequenzwerte der stationären Störsignale aus und ermittelt und generiert aus ihnen spektrale Nullstellen, die er in die vom Spreizfunktionsgenerator SG1 generierte Spreizfunktion einfügt. Die spektralen Nullstellen werden derart generiert, daß bei einer Entspreizung der übertragenen gespreizten breitbandigen Signale die durch die dabei auftretende Speizung der Störsignale eingestreute Störung in den Frequenzbereich der breitbandigen Signale minimal ist. Die Spreizung der Störsignale mit der Spreizfunktion mit den spektralen Nullstellen erzeugt idealerweise Nullstellen im Frequenzbereich der breitbandigen Signale. Der Nullstellengenerator NG1 beinhaltet beispielsweise einen digitalen Signalprozessor.

Der Multiplizierer MUL2 dient zur Multiplikation der empfangenen breitbandigen Signale mit der generierten Spreizfunktion mit spektralen Nullstellen. Durch die Multiplikation wird die Entspreizung der breitbandigen Signale erzielt. Vor der Multiplikation haben die breitbandigen Signale beispielsweise die Bandbreite 25 MHz, nach der Multiplikation beispielsweise die Bandbreite 2 MHz. Der Multiplizierer MUL1 ist beispielsweise aus logischen Gattern aufgebaut.

Das Tiefpaßfilter TP ist dem Multiplizierer MUL2 nachgeschaltet. Die Bandbreite des Tiefpaßfilters TP ist wenigstens so groß wie die Bandbreite der breitbandigen Signale. Das Tiefpaßfilter TP dient dazu, die Frequenzbereiche außerhalb des Frequenzbereichs der empfangenen, entspreizten breitbandigen Signale zu sperren.

Nachfolgend wird ein Verfahren zum Übertragen von breitbandigen Signalen von einer Sende-/Empfangseinrichtung SE1 in einer Endstelle END über eine Übertragungsstrecke zu einer Sende-/Empfangseinrichtung SE2 in einer Zentrale ZE beschrieben.

Zunächst werden die Charakteristika der stationäre Störsignale, z.B. ihre Frequenzwerte, an der Sende-/Empfangseinrichtung SE2 detektiert und gespeichert. Die stationären Störsignale werden z.B. in ein Koaxialkabel eingestrahlt. Die Amplitude und/oder die Intensität der detektierten Störsignale wird ermittelt und mit einem Minimalwert verglichen. Der Minimalwert gibt beispielsweise an, bis zu welchem Wert sich eine Störung noch nicht wesentlich auswirkt und aus diesen Gründen tolerabel ist. Liegen die Amplituden- und/oder die Intensitätswerte einiger Störsignale über dem Minimalwert, so werden nur die Frequenzwerte dieser Störsignale abgespeichert. Es findet also eine Auswahl der detektierten Störsignale statt. Die abgespeicherten Frequenzwerte werden einerseits zu dem Nullstellengenerator NG2 in der Sende-/Empfangseinrichtung SE2 und andererseits zu den Nullstellengeneratoren NG1 in den Sende-/Empfangseinrichtungen SE1 der Endstellen END übertragen.

In den Sende-/Empfangseinrichtungen SE1 der Endstellen END wird jeweils eine Spreizfunktion mit spektralen Nullstellen in Abhängigkeit von den an der jeweiligen Sende-/Empfangseinrichtung SE1 empfangenen Frequenzwerten generiert. Alle Spreizfunktionen haben spektrale Nullstellen an denselben Stellen. Beispielsweise ist für eine Übertragung im CDMA-Verfahren jede Spreizfunktion orthogonal zu jeder anderen, so daß eine Überlagerung aller aus den Spreizfunktionen gebildeten Spreizspektren in der Zentrale detektierbar bleibt; CDMA = Code Division Multiple Access. Die zu übertragenden breitbandigen Signale einer Endstelle END werden mit der jeweiligen Spreizfunktion mit spektralen Nullstellen multipliziert und anschließend zur zweiten Sende-/Empfangseinrichtung SE2 in der Zentrale ZE übertragen. In der Zentrale ZE wird für jede Endstelle END eine zur Endstelle END korrespondierende Spreizfunktion generiert, mittels derer durch Multiplikation oder Addition mit den empfangen Signalen und anschließender Filterung die Entspreizung erfolgt. Zur Filterung wird jeweils ein Tiefpaßfilter TP verwendet, das wenigstens die gleiche Bandbreite hat, wie die breitbandigen Signale in der ersten Sende-/Empfangseinrichtung SE1 für die zugehörige Endstelle END.

Durch die Verwendung der Spreizspektrums-Technik werden die durch instationäre, in die Übertragungsleitung eingestrahlte Störsignale auftretenden Störungen reduziert. Durch die zusätzliche Einfügung von spektralen Nullstellen in den Spreizfunktionen werden auch die durch die stationären Störsignale verursachten Störungen minimiert.

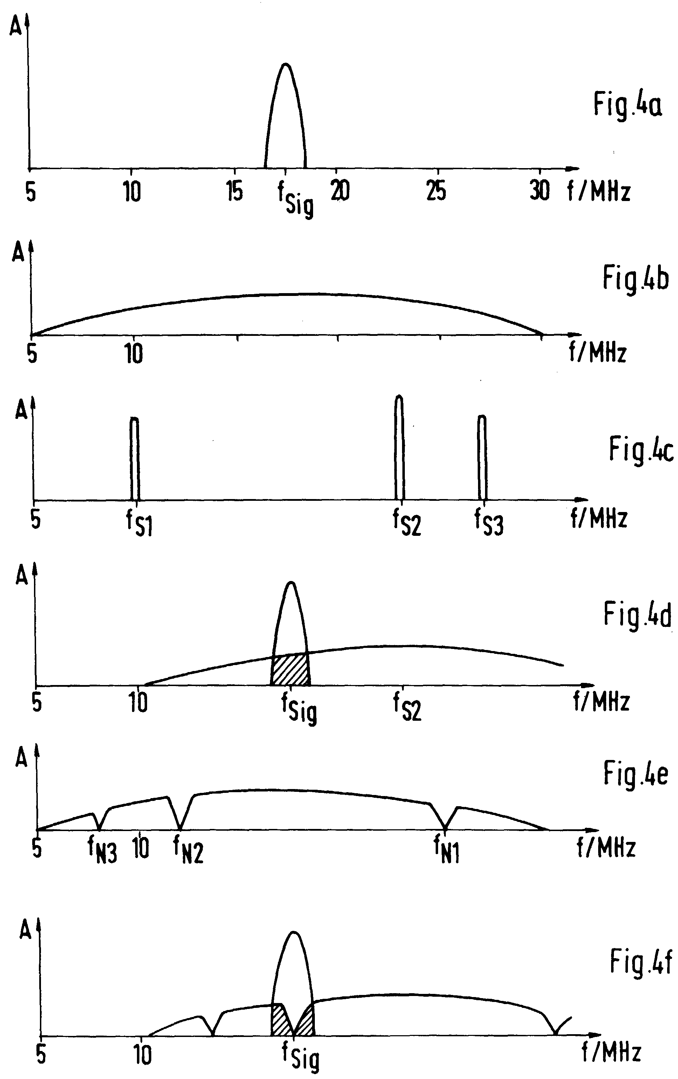

Fig. 4 zeigt eine Darstellung von sechs Diagrammen für unterschiedliche Signalspektren. Auf allen Diagrammen ist auf der vertikalen Achse die Amplitude und auf der horizontalen Achse die Frequenz aufgetragen.

Fig. 4a zeigt die Darstellung eines von einer Endstelle END zur Zentrale ZE zu übertragendes breitbandiges Signal. Das breitbandige Signal hat beispielsweise die Bitrate 2 Mbit/s und die Bandbreite 2 MHz. Die Mittenfrequenz $f_{Sig}$ beträgt beispielsweise 17,5 MHz.

Fig. 4b zeigt die Darstellung einer Spreizfunktion ohne spektrale Nullstellen, wie sie üblicherweise bei der pseudozufälligen 0/180°-Phasensprungmodulation Spreizspektrums-Technik verwendet wird. Die Spreizfunktion hat beispielsweise die Bandbreite 25 MHz, so daß das breitbandige Signal über den gesamten Rückkanalfrequenzbereich von 5 MHz bis 30 MHz gespreizt werden kann.

Fig. 4c zeigt die Darstellung von drei stationären Störsignalen, die in der Zentrale ZE detektiert und abgespeichert wurden, das erste bei 10 MHz, das zweite bei 23 MHz, das dritte bei 27 MHz. Die Frequenzwerte sind Beispielwerte.

Fig. 4d zeigt die Darstellung des entspreizten breitbandigen Signals in der Zentrale ZE und des gespreizten zweiten Störsignals. In der Zentrale ZE wird das über die Übertragungsstrecke übertragene gespreizte breitbandige Signal empfangen und durch Multiplikation mit der Spreizfunktion aus Fig. 4b entspreizt. Bei der Entspreizung werden aber auch die stationären Störsignale mit der Spreizfunktion multipliziert und dadurch gespreizt. Damit gelangen Teile der Störsignale auch in das Frequenzband der breitbandigen Signale und führen zu einem verminderten Signal-zu-Rausch Verhältnis. Als Beispiel ist die Auswirkung der Spreizung des zweiten Störsignals dargestellt, wie sie ungewollt bei der Entspreizung entsteht.

Fig. 4e zeigt die Darstellung einer Spreizfunktion mit spektralen Nullstellen, die beispielsweise am Ausgang des Nullstellengenerators NG2 zur Verfügung steht. Die Spreizfunktion hat Nullstellen, die in Abhängigkeit von den Frequenzwerten der stationären Störsignale, im Beispiel drei, ermittelt werden. Die spektralen Nullstellen werden derart generiert, daß bei einer Multiplikation der Spreizfunktion mit den spektralen Nullstellen mit den einzelnen Störsignalen jeweils wenigstens eine der spektralen Nullstellen im Frequenzbereich der breitbandigen Signale liegen. Dazu wird die folgende Formel verwendet:

$$f_{Ni} = 2 \times f_{Sig} - f_{Si} \text{ , mit}$$

$f_{Ni} =$ Frequenzwert der Nullstelle i, i = 1, 2, ..., bis Anzahl der gespeicherten Störsignale, im Beispiel drei,

$f_{Sig} =$ Mittenfrequenz des zu übertragenden breitbandigen Signals,

$f_{Si} =$ Frequenzwert des i-ten Störsignals.

Die Nullstellen der Spreizfunktion ergeben sich damit unter Berücksichtigung der drei Störsignale zu $f_{N1} = 2 \times 17,5$ MHz - 10 MHz = 25 MHz, $f_{N2} = 2 \times 17,5$ MHz - 23 MHz = 12 MHz und $f_{N3} = 2 \times 17,5$ MHz - 27 MHz = 8 MHz.

Fig. 4f zeigt die Darstellung des mit der Speizfunktion aus Fig. 4e gespreizten, über die Übertragungsstrecke übertragenen und mit der Speizfunktion aus Fig. 4e entspreizten breitbandigen Signals in der Zentrale ZE sowie des mit der Spreizfunktion aus Fig. 4e gespreizten zweiten Störsignals. Durch die Nullstelle $f_{N2}$ in der Spreizfunktion mit spektralen Nullstellen wird bei der Spreizung des zweiten Störsignals ein Spreizspektrum generiert, das eine Nullstelle bei der Mittenfrequenz $f_{Sig}$ des breitbandigen Signals hat. Dadurch reduziert sich der Einfluß des Störsignals auf das Signal-zu-Rausch Verhältnis.

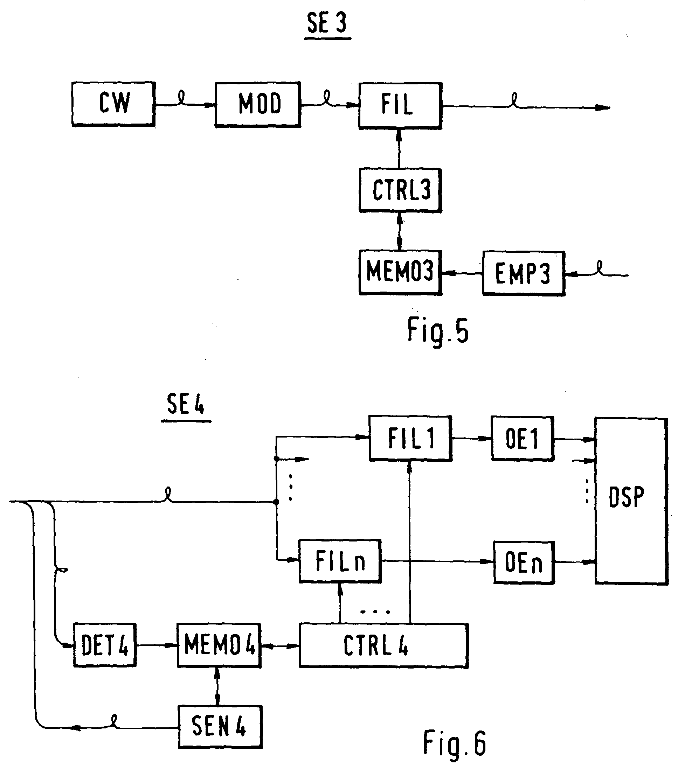

Das zweite Ausführungsbeispiel wird unter Zuhilfenahme der Fig. 5 und 6 erläutert. Fig. 5 zeigt einen schematisch dargestellten Aufbau einer dritten erfindungsgemäßen Sende-/Empfangseinrichtung des Übertragungsnetzes aus Fig.1. Die Sende-/Empfangseinrichtung SE3 dient zur optischen Übertragung von breitbandigen Signalen mittels der Spreizspektrums-Technik SE3 von einer optischen Netzwerkeinheit ONU über optische Glasfaserleitungen zur Zentrale ZE. Die zu übertragenden breitbandigen Signale stammen von einer oder mehreren Endstellen, die der optischen Netzwerkeinheit ONU beispielsweise über Koaxialkabel zugeführt werden. Die optische Netzwerkeinheit ONU beinhaltet eine Empfangseinheit EMP3, einen Speicher MEMO3, eine optische Breitbandquelle CW, einen elektro/optischen Modulator MOD, eine Steuereinheit CTRL3 und ein optisches Filter FIL.

Die Empfangseinheit EMP3 dient zum Empfang von Frequenzwerten von stationären Störsignalen, die auf der optischen Übertragungsstrecke zur Zentrale ZE auftreten. Die stationären Störsignalen werden in der Zentrale ZE gemessen, zwischengespeichert und zu allen optischen Netzwerkeinheiten ONU übertragen. Die Empfangseinheit EMP3 entspricht z.B. der Empfangseinheit EMP1 der Sende-/Empfangseinrichtung SE1 mit vorgeschaltetem Optisch/Elektrisch-Umsetzer.

Der Speicher MEMO3 dient zur Speicherung der empfangenen Frequenzwerte. Er entspricht z.B. dem Speicher MEMO1 der Sende/Empfangseinrichtung SE1.

Die optische Breitbandquelle CW beinhaltet beispielsweise einen optischen Faserverstärker, der Licht mit einem frequenzmäßig kontinuierlichen Spektrum erzeugt. Die Bandbreite des Spektrums beträgt beispielsweise das zehnfache der Bandbreite der breitbandigen Signale.

Der elektro/optische Modulator MOD dient zur Modulation der optischen Ausgangssignale der optischen Breitbandquelle CW mit den zu übertragenden breitbandigen Signalen. Bei der Modulation wird die Bandbreite der breitbandigen Signale auf z.B. die zehnfache Bandbreite gespreizt.

Anstelle der separaten optischen Breitbandquelle CW und des separaten elektro/optischen Modulators MOD kann auch eine direkt modulierte Breitbandlichtquelle, z.B. eine direkt modulierte Leuchtdiode verwendet werden.

Die Steuereinheit CTRL3 ist beispielsweise ein digitaler Signalprozessor. Sie dient dazu, das optische Filter FIL anzusteuern.

Das optische Filter FIL hat einstellbare Sperrfrequenzen, die wenigstens zum Teil in Abhängigkeit von den gespeicherten Frequenzwerten ermittelt werden. Das optische Filter FIL dient dazu, aus dem kontiuierlichen Spektrum Frequenzen herauszufiltern. Einerseits werden mittels des optischen Filters die Frequenzen herausgefiltert, die für das optische Spreizspektrum nach dem optischen CDMA-Verfahren für jede Endstelle individuell eingestellt werden; CDMA = Code Division Multiple Access. Andererseits werden mittels des optischen Filters FIL die Frequenzen herausgefiltert, die mit den gespeicherten Frequenzwerten übereinstimmen, um die Übertragung unabhängig und ungestört von den stationären Störsignalen durchzuführen. Diejenigen Frequenzen, die nicht weitergeleitet werden sind die Sperrfrequenzen.

Fig. 6 zeigt einen schematisch dargestellten Aufbau einer vierten erfindungsgemäßen Sende-/Empfangseinrichtung des Übertragungsnetzes aus Fig.1. Die Sende-/Empfangseinrichtung SE4 dient dazu, die von den optischen Netzwerkeinheiten ONU übertragenen breitbandigen Signale zu entspreizen. Die Sende-/Empfangseinrichtung SE4 beinhaltet mehrere optische Filter FIL1 bis FILn, mit n = 1, 2, 3, ..., die alle einstellbare Sperrfrequenzen haben. Die optischen Filter FIL1 bis FILn werden von einer Steuereinheit CTRL angesteuert. Jedem optischen Filter FIL1 bis FILn ist ein Optisch/Elektrisch-Umsetzer OE1 bis OEn, mit n = 1, 2, 3, ... , nachgeschaltet. Die Auswertung der entspreizten Signale erfolgt in einem digitalen Signalprozessor DSP, der zusätzlich auch die Ansteuerung der Filter FIL1 bis FILn anstelle der Steuereinheit CTRL4 durchführen kann.

Die Sende-/Empfangseinrichtung SE4 beinhaltet ferner einen Optisch/Elektrisch-Umsetzer OE, eine Detektionseinheit DET4, einen Speicher MEMO4 und eine Sendeeinheit SEN4.

Die Detektionseinheit DET4, der Speicher MEMO4 und die Sendeeinheit SEN4 entsprechen der Detektionseinheit DET2, dem Speicher MEMO2 bzw. der Sendeeinheit SEN2 aus Fig. 3 und erfüllen auch dieselben Aufgaben. In der Detektionseinheit DET4 ist zusätzlich ein Optisch/Elektrisch-Umsetzer und in der Sendeeinheit SEN4 zusätzlich ein Elektrisch/Optisch-Umsetzer vorhanden, um die nötigen Umsetzungen vom Optischen ins Elektrische und umgekehrt durchzuführen. Stationäre Störsignale werden somit detektiert, abgespeichert und über die Steuereinheit CTRL den optischen Filtern FIL1 bis FILn zugeführt sowie deren Frequenzwerte zu der oder den optischen Netzwerkeinheiten ONU übertragen. In den optischen Filtern FIL1 bis FILn mit nachgeschalteten Optisch/Elektrisch-Umsetzern OE1 bis OEn werden die empfangenen breitbandigen Signale entspreizt, indem die für jede Endstelle individuellen Frequenzen, abhängig vom individuellen Kode nach dem CDMA-Verfahren, sowie die Frequenzwerte der stationären Störsignale aus den empfangenen Signalen herausgefiltert und die weitergeleiteten Signale anschließend z.B. mit einer Photodiode in elektrische Signale umgesetzt werden. Die elektrischen Signale können dann in dem digitalen Signalprozessor DSP weiterverarbeitet werden.

Beide Ausführungsbeispiele sind auf die leitungsgebundene Übertragung beschränkt. Anstelle bei der leitungsgebundenen Übertragung kann die Erfindung auch z.B. bei Funksystemen angewendet werden. Gerade bei Funksystemen besteht aufgrund des hohen Verkehrsaufkommens, z.B. im Mobilfunk oder im Richtfunk, die Notwendigkeit alternative störungsunempfindlichere Übertragungsverfahren, als z.B. das reine CDMA-Verfahren zur Verfügung zu stellen. Hinzu kommt, daß sich stationäre Störsignale, z.B. von Rundfunksendern, verstärkt auswirken, da die Schirmdämpfung der Übertragungsleitung entfällt, und sie sich damit im gleichen Übertragungsmedium, der Luft, befinden.

## Patentansprüche

1. Sende-/Empfangseinrichtung ( SE1 ) zur Übertragung von breitbandigen Signalen mittels der Spreizspektrums-Technik, mit

   - einer Empfangseinheit ( EMP1 ) zum Empfang von Frequenzwerten von stationären Störsignalen, die in die Übertragungsstrecke eingestrahlt werden,
   - einem Speicher ( MEMO1 ) zur Speicherung der empfangenen Frequenzwerte,
   - einem Generator ( SG1, NG1 ) zur Generierung einer Spreizfunktion mit spektralen Nullstellen bei Frequenzwerten, die in Abhängigkeit von den gespeicherten Frequenzwerten ermittelt werden und

- einem Multiplizierer ( MUL1 ) zur Multiplikation der zu übertragenden breitbandigen Signale mit der generierten Spreizfunktion mit spektralen Nullstellen.

2. Sende-/Empfangseinrichtung ( SE1 ) nach Anspruch 1, dadurch gekennzeichnet, daß der Generator ( SG1, NG1 ) einen Spreizfunktionsgenerator ( SG1 ) zur Generierung einer Spreizfunktion für eine pseudozufällige 0/180°-Phasensprungmodulation oder eine pseudozufällige Frequenzsprungmodulation und einen Nullstellengenerator ( NG1 ) zur Generierung und Einfügung von spektralen Nullstellen in die generierte Spreizfunktion beinhaltet, und daß die spektralen Nullstellen derart generiert werden, daß bei einer Multiplikation der Spreizfunktion mit den spektralen Nullstellen mit den einzelnen Störsignalen jeweils wenigstens eine der spektralen Nullstellen im Frequenzbereich der breitbandigen Signale liegt.

3. Sende-/Empfangseinrichtung ( SE2 ) zum Empfang von mittels der Spreizspektrums-Technik modulierten breitbandigen Signalen, mit

- einer Detektionseinheit ( DET2 ) zur Detektion von Frequenzwerten von stationären Störsignalen,
- einer Sendeeinheit ( SEN ) zur Übertragung der detektierten Frequenzwerte,
- einem Speicher ( MEMO2 ) zur Speicherung der detektierten Frequenzwerte,
- einem Generator ( SG2, NG2 ) zur Generierung einer Spreizfunktion mit spektralen Nullstellen bei Frequenzwerten, die in Abhängigkeit von den gespeicherten Frequenzwerten ermittelt werden und
- einem Multiplizierer ( MUL2 ) zur Multiplikation der zu übertragenden breitbandigen Signale mit der generierten Spreizfunktion mit spektralen Nullstellen.

4. Sende-/Empfangseinrichtung ( SE2 ) Anspruch 3, dadurch gekennzeichnet, daß in der Detektionseinheit ( DET2 ) eine Amplituden- und/oder Intensitätsbestimmung der empfangenen stationären Störsignale und nach einem Vergleich mit einem Minimalwert eine Auswahl der Frequenzwerte mit den höchsten Amplituden und/oder Intensitäten erfolgt, und daß nur diese Frequenzwerte zum Speicher ( MEMO2 ) und zur Sendeeinheit ( SEN ) weitergeleitet werden.

5. Sende-/Empfangseinrichtung ( SE2 ) Anspruch 3, dadurch gekennzeichnet, daß der Generator ( SG2, NG2 ) einen Spreizfunktionsgenerator ( SG2 ) zur Generierung einer Spreizfunktion für eine pseudozufällige 0/180°-Phasensprungmodulation oder eine pseudozufällige Frequenzsprungmodulation und einen Nullstellengenerator ( NG2 ) zur Generierung und Einfügung von spektralen Nullstellen in die generierte Spreizfunktion beinhaltet, und daß die spektralen Nullstellen derart generiert werden, daß bei einer Multiplikation der Spreizfunktion mit den spektralen Nullstellen mit den einzelnen Störsignalen jeweils wenigstens eine der spektralen Nullstellen im Frequenzbereich der breitbandigen Signale liegt.

6. Sende-/Empfangseinrichtung ( SE2 ) Anspruch 3, dadurch gekennzeichnet, daß die Sende-/Empfangseinrichtung ( SE2 ) ein Tiefpaßfilter ( TP ) beinhaltet, das eine Bandbreite hat, die wenigstens so groß wie die Bandbreite der breitbandigen Signale ist, und dem Multiplizierer ( MUL2 ) nachgeschaltet ist.

7. Verfahren zum Übertragen von breitbandigen Signalen von einer ersten Sende-/Empfangseinrichtung ( SE1 ) zu einer zweiten Sende/Empfangseinrichtung ( SE2 ), bei dem

- stationäre Störsignale an der zweiten Sende-/ Empfangseinrichtung ( SE2 ) detektiert und zur ersten Sende-/Empfangseinrichtung ( SE1 ) übertragen werden,
- in der ersten Sende-/Empfangseinrichtung ( SE1 ) eine Spreizfunktion mit spektralen Nullstellen in Abhängigkeit von den übertragenen Frequenzwerten generiert wird und
- die zu übertragenden breitbandigen Signale mit der Spreizfunktion mit spektralen Nullstellen multipliziert und anschließend zur zweiten Sende/Empfangseinrichtung ( SE2 ) übertragen werden.

8. Verfahren nach Anspruch 7, dadurch gekennzeichnet, daß in der zweiten Sende-/Empfangseinrichtung ( SE2 ) die empfangenen Signale mit einer Spreizfunktion multipliziert werden, die spektrale Nullstellen an dengleichen Stellen aufweist, wie die in der ersten Sende/Empfangseinrichtung ( SE1 ) generierte Spreizfunktion.

9. Verfahren nach Anspruch 7, dadurch gekennzeichnet, daß in der zweiten Sende-/Empfangseinrichtung ( SE2 ) die empfangenen Signale nach der Multiplikation mit einem Tiefpaßfilter ( TP ) gefiltert werden, das wenigstens die gleiche Bandbreite hat, wie die breitbandigen Signale ersten Sende-/Empfangseinrichtung ( SE1 ).

10. Sende-/Empfangseinrichtung ( SE3 ) zur optischen Übertragung von breitbandigen Signalen mittels der Spreizspektrums-Technik, mit

- einer Empfangseinheit ( EMP3 ) zum Empfang von Frequenzwerten von stationären Störsignalen, die auf einer optischen Übertragungsstrecke auftreten,
- einem Speicher ( MEMO3 ) zur Speicherung der empfangenen Frequenzwerte,
- einer optischen Breitbandquelle ( CW ),
- einem elektro/optischen Modulator ( MOD ) zur Modulation der optischen Ausgangssignale der optischen Breitbandquelle ( CW ) mit den zu übertragenden breitbandigen Signalen und
- einem optischen Filter ( FIL ) mit einstellbaren Sperrfrequenzen, die wenigstens zum Teil in Abhängigkeit von den gespeicherten Frequenzwerten eingestellt werden.

11. Sende-/Empfangseinrichtung ( SE3 ) nach Anspruch 10, dadurch gekennzeichnet, daß die Sperrfrequenzen mit den gespeicherten Frequenzwerten übereinstimmen.

12. Sende-/Empfangseinrichtung ( SE4 ) zum Empfang von mittels der Spreizspektrums-Technik modulierten breitbandigen Signalen, mit

- einer Detektionseinheit ( DET4 ) zur Detektion von Frequenzwerten von stationären Störsignalen,
- einer Sendeeinheit ( SEN4 ) zur Übertragung der detektierten Frequenzwerte,
- einem Speicher ( MEMO4 ) zur Speicherung der detektierten Frequenzwerte,
- wenigstens einem optischen Filter ( FIL1 bis FILn ) mit einstellbaren Sperrfrequenzen, die wenigstens zum Teil in Abhängigkeit von den gespeicherten Frequenzwerten eingestellt werden und
- wenigstens einem Optisch/Elektrisch-Umsetzer ( OE1 bis OEn ), der dem wenigstens einen optischen Filter ( FIL1 bis FILn ) nachgeschaltet ist und der zur Optisch/Elektrisch-Umsetzung der durch das wenigstens einen optische Filter ( FIL1 bis FILn ) weitergeleiteten Signale dient.

Fig.1

SE 1

Fig. 2

SE2

Fig. 3

Fig.4a

Fig.4b

Fig.4c

Fig.4d

Fig.4e

Fig.4f

## SE 3

Fig.5

## SE 4

Fig.6